# EUROPEAN PATENT APPLICATION

(11) **EP 1 813 633 A1**
(43) Date of publication of application: **01.08.2007**
(21) Application number: 06001898.3
(22) Date of filing: 31.01.2006
(51) Int. Cl.: C08G 59/14, C08G 18/58, C09D 163/10

(54) **Aqueous dispersions of chain-extended epoxy amine adducts**

(71) Applicant: Cytec Surface Specialties Austria GmbH, 8010 Graz (AT)
(72) Inventor: Paar, Willibald, Dr., 8010 Graz (AT); Friedl, Maximilian, Dr., 8101 Gratkorn (AT)
(74) Representative: Deckers, Hellmuth Alexander

(57) **Abstract**

A chain-extended fatty acid modified hydroxy functional epoxy amine adduct **ABC** which contains urethane groups and comprises moieties derived from epoxy resins **A**, fatty acids **B** and amines **C**, which adduct is chain extended by addition of polyfunctional isocyanates **D** to the adducts **ABC**, a process for its production, and methods of use thereof in formulating air-drying aqueous coating compositions as well as one-pack and two-pack aqueous coating compositions

## Description

This invention relates to aqueous dispersions of chain-extended epoxy amine adducts, a method for their synthesis, and the use thereof in coating compositions particularly in corrosion protection of metals.

Aqueous dispersions of neutralised reaction products made from epoxy amine adducts and fatty acids have been described in EP-A 0 070 704. In a first step, adducts are made from amines and epoxy resins based on polyvalent phenols which have a molar mass of from 1000 g/mol to 3000 g/mol. These are reacted in a second step with unsaturated fatty acids, the mass fraction of acids in the sum of masses of acids and epoxy-amine adducts is from 25 % to 50 %. The amount of fatty acids is chosen in a way that all or nearly all (which is in excess of 90 % of these) active amino groups are converted to amides in this reaction.

Adducts based on the reaction products made by multi-step (consecutive) or concurrent reaction of epoxide compounds, amines, and fatty acids have been known, as intermediate products, from EP 1 233 034 B1. As the reaction is conducted in a way that all epoxide groups are consumed, and that substantially all amino hydrogen atoms are consumed, the reaction product is high in hydroxyl groups resulting from the ring opening reaction and addition of the epoxide compounds. These intermediates are reacted further with more epoxide functional compounds to obtain a high molar mass air drying binder.

It has been found in the experiments that have led to the present invention that corrosion resistance and chemical resistance of coatings made with such binders still need improvement. Although adhesion of the coating to the base metal was already quite satisfactory, adhesion to subsequent paint layers which is of paramount importance for impact and delamination resistance was found to be not entirely satisfactory.

It is therefore an object to improve binders based on fatty acid and urethane modified epoxy amine adducts with regard to the chemical and corrosion resistance and improved interlayer adhesion of coatings produced therewith.

This object has been achieved by chain-extending such fatty acid modified hydroxy functional epoxy amine adducts **ABC** which comprise moieties derived from epoxy resins **A,** fatty acids **B** and amines **C.** Chain extension is performed by addition of polyfunctional isocyanates **D** to the adducts **ABC.** The hydroxyl groups in **ABC** generated by ring opening and addition of fatty acids **B** and amines **C** to epoxide group-bearing compounds **A** are at least partly consumed in this addition reaction, and urethane groups are formed. This chain extension step is preferably carried out in the aqueous phase. It is also possible to make the chain extension step before introduction into the aqueous phase.

Chain extension of the adducts **ABC** mentioned supra via reaction with polyfunctional isocyanates **D** has been found to lead to binders which have the properties sought for. In addition, upon such chain extension with polyfunctional isocyanates, the corrosion resistance of coatings produced with the binder **ABCD** obtained is drastically improved.

In a preferred embodiment, a part of the polyfunctional isocyanate **D** may already be added during the synthesis of the adducts **ABC,** while dissolved in an organic solvent, leading to urethane modified adducts **ABCD**'. In this case, the partly chain extended adduct **ABCD'** is finally also converted to the aqueous phase, with a further chain extension step being made thereafter in the aqueous phase. This variant is advantageous because during chain extension in the organic phase, less reactive chain extenders can be used which do not have to compete with water, while in the second chain extension step carried out in the aqueous phase, aminic chain extenders are needed. The chemistry can therefore be tailored to that required by the specific application.

The epoxy resins **A** are preferably selected from diepoxide or polyepoxide compounds having two or more than two epoxide groups per molecule. They are made in a conventional manner by reaction of epichlorohydrin with aromatic or (cyclo) aliphatic compounds having two or more than two hydroxyl groups per molecule, according to the TAFFY-process, or by reaction of diepoxides or polyepoxides with the said aromatic or (cyclo) aliphatic compounds having two or more than two hydroxyl groups per molecule (the so-called advancement process).

Preferred are epoxy resins **A** based on aromatic dihydroxy compounds such as bisphenol **A,** bisphenol F, dihydroxy diphenyl sulphone, hydroquinone, resorcinol, 1,4-bis-[2-(4-hydroxyphenyl)-2-propyl-]benzene, and those based on aliphatic dihydroxy compounds such as 1,6-hexane diol, 1,4-butane diol, 1,4-cyclohexane dimethanol, and oligo- or poly-propylene glycol. The specific content of epoxide groups in the said epoxy resins **A** is preferably from 0.4 mol/kg to 7 mol/kg, particularly preferably from 0.5 mol/kg to 6 mol/kg. In a preferred embodiment, diepoxide compounds are used for **A** where the specific content of epoxide groups is preferably from 0.5 mol/kg to 4 mol/kg. Especially preferred are epoxy resins based on bisphenol A and bisphenol F, as well as mixtures of these.

The fatty acids **B** have preferably at least one olefinic unsaturation and have preferably from 6 to 30 carbon atoms, particularly preferably from 8 to 26 carbon atoms, and especially preferred, from 16 to 22 carbon atoms. Among the unsaturated fatty acids, palmoleic acid, oleic acid, erucic acid, linoleic, linolenic and elaostearic acids, arachidonic acid and clupanodonic acids as well as the mixtures of fatty acids obtainable from natural oils such as linseed fatty acid, soy bean oil fatty acid, sunflower fatty acid and its isomerisation product, conjuvandolic acid, tall oil fatty acid, cotton seed oil fatty acid, rape seed oil fatty acid, and fatty acid mixtures obtainable from dehydrated castor oil are preferred.

The amines **C** are preferably aliphatic linear, branched or cyclic amines having at least one primary or secondary amino group. They preferably have from 6 to 12 carbon atoms, and may also contain further functional groups such as tertiary amino groups and hydroxyl groups. Particularly suitable amines are primary monoamines having from 6 to 12 carbon atoms such as hexylamine, cyclohexylamine, 2-ethyl hexylamine, and stearylamine, primary diamines like ethylene diamine, 1,4-diamino butane, and 1,6-diamino hexane, primary-tertiary diamines like N,N-dimethylamino propylamine, N,N-diethylamino propylamine, primary-secondary amines like 1,9-diamino-5-aza-nonane, 1,13-diamino-7-azatridecane, triethylene tetramine, and teraethylene pentamine, as well as the mixtures of oligomeric diaminopolyethylene imines commercially available under the trade name of ®Polymin, primary ether diamines such as alpha,omega-diamino polyoxypropylene, and also secondary amines and diamines such as piperidine, piperazine, di-n-butylamine, morpholine, and hydroxy functional amines such as ethanolamine, diethanolamine, and diisopropanolamine. It is also possible to use mixtures of the said amines.

The intermediates **ABC** may be produced by a sequential reaction wherein at first, the epoxide compounds **A** are reacted with the amines **C** to form a product **AC** which adduct is then reacted with fatty acids **B** to form an intermediate **ABC.** It is also possible, however, to react the epoxide compounds **A** with fatty acids **B** to form a product **AB** and to react the residual epoxide groups in **AB** with the amines **C.** It is likewise possible to effect both reactions at the same time, and thus make the intermediates **ABC** in one step. The amounts of educts (starting materials) **A**, **B**, and **C** are chosen such that essentially all epoxide groups, i. e. at least 90 %, preferably at least 95 %, and particularly preferably at least 98 % of all epoxy groups originally present in **A** are consumed. The reaction has to be conducted, in a preferred manner, in a way that the intermediate **ABC** does not have any reactive amino hydrogen atoms left, the maximum specific amount of substance of reactive amino hydrogen atoms in the intermediate **ABC,** however, shall preferably not exceed 10 mmol/kg.

One variant of the process to make the products of the present invention is consuming a part of the amino groups of the amines **C** by reaction with a monoepoxide **A'** if amines having more than two amine hydrogen atoms are used. This reaction transforms a primary amino group having two active aminic hydrogen atoms to a secondary hydroxyamine group, and a secondary amino group having one active aminic hydrogen atom is transformed to a tertiary hydroxyamine group. As monoepoxides **A',** any aliphatic or aromatic monoepoxide compound can be used, as well as mixtures of these. Especially preferred are glycidyl ethers of monohydric alcohols or phenols such as butyl glycidyl ether, 2-ethyl hexyl glycidyl ether, phenyl glycidyl ether, as well as glycidyl esters of monofunctional acids which are preferably aliphatic or aromatic monocarboxylic acids, such esters being glycidyl benzoate, glycidyl acetate, and glycidyl stearate, as well as the glycidyl esters of aliphatic carboxylic acids which are branched in the alpha position with relation to the carboxylic acid group, such as glycidyl 2-ethylhexanoate, glycidyl 2,2-dimethyl propionate, glycidyl 2,2-dimethyl octanoate, glycidyl 2-methylnonanoate, and especially preferably, glycidyl esters of mixtures of alpha branched aliphatic carboxylic acids which are sold under the trade names of ®Cardura E5 or ®Cardura E10.

According to this preferred embodiment, the functionality of the amines **C** is reduced, entirely or partially, prior to reaction with **A** or **AB** by reaction with the said monoepoxides, **A'.** These modified amines **C'** are then reacted, either alone or in mixture with the unmodified amines, **C,** with the components **A** or **AB** (in a step-wise reaction), or with both **A** and **B** (in a concurrent reaction).

It is also possible, within the scope of the present invention, to react the epoxy resins before, after, or during the reaction with the reactants **B** and **C**, with further compounds **E** which have at least one hydrogen atom which is reactive towards epoxide groups, in a hydroxyl or a carboxyl group, viz., alcohols, phenols, or acids, especially compounds with activated hydroxyl groups or acids, which are preferably selected from the group consisting of aliphatic diols and polyols, such as ethylene glycol, propylene glycol, and butane diol, dihydroxycyclohexane, cyclohexane dimethanol, neopentyl glycol, glycerol, trimethylolethane and -propane, pentraerythritol, erythritol, mannitol, and sorbitol, phenol, resorcinol, isomeric dihydroxynaphthalenes, acetic acid, lactic acid, benzoic acid, and phthalic acid.

The chain-extended products **ABCD** are stabilised in the aqueous phase by addition of acids which protonate the amino groups and thus provide the amount of cations needed to stably emulsify the products **ABCD** as an aqueous dispersion.

These dispersions are formulated as coating compositions by addition of the common additives such as wetting agents, antifoamers, levelling agents, pigments and fillers. Coating compositions made therefrom are especially suited to coat metals where they impart improved corrosion protection, especially for base metals such as iron and iron alloys, and they have good adhesion both to the substrate and consecutive paint layers.

Due to incorporation of unsaturated fatty acids, the binders comprising the reaction products ABCD can be formulated as air-drying coating compositions, by addition of the usual siccatives based on metal salts of cobalt, manganese, etc. As they possess hydroxyl groups, they can also be cured with nonblocked polyfunctional isocyanates in a 2-pack formulation, or together with capped polyfunctional isocyanates or aminoplast resins as 1-pack stoving resins.

### Examples

### Example 1

1900 g of a bisphenol A based epoxy resin having a specific content of epoxy groups of 2.1 mol/kg ("epoxy equivalent weight" of 475 g/mol) were dissolved in methoxy propanol together with 420 g of tall oil fatty acid (1.5 mol), 102 g of dimethylamino propylamine (1 mol) and 53 g of diethanolamine (0.5 mol) to make a solution of 70 % strength (70 g of solutes in 100 g of the solution), and reacted at 110 °C until the epoxy groups were completely consumed.

60 mmol of acetic acid were then added, the mixture was diluted with desalinated water to a mass fraction of solids of 40 %.

1000 g of this mixture were then mixed at 60 °C with 40 g of ®Desmodur N 100 (corresponding to 10 % of the mass of resins solids in the said solution, hexamethylene diisocyanate, Bayer AG, Leverkusen). The mixture was held at 60 °C until the isocyanate groups were completely consumed. An emulsion was obtained having an average particle size of 140 nm, and showing no gel particles.

### Example 2

1900 g of a bisphenol A based epoxy resin having a specific content of epoxy groups of 2.1 mol/kg ("epoxy equivalent weight" of 475 g/mol) were dissolved in xylene propanol together with 420 g of tall oil fatty acid (1.5 mol), 102 g of dimethylamino propylamine (1 mol) and 53 g of diethanolamine (0.5 mol) to make a solution of 70 % strength (70 g of solutes in 100 g of the solution), and reacted at 110 °C until the epoxy groups were completely consumed. The mixture was cooled to 100 °C, and 200 g of isophorone diisocyanate were added. The mixture was held at 100 °C under stirring until no more residual isocyanate groups were detectable.

60 mmol of acetic acid were then added, the mixture was diluted with desalinated water to a mass fraction of solids of 40 %.

1000 g of this mixture were then mixed at 60 °C with 40 g of ®Desmodur N 100 (corresponding to 10 % of the mass of resins solids in the said solution, hexamethylene diisocyanate, Bayer AG, Leverkusen). The mixture was held at 60 °C until the isocyanate groups were completely consumed. An emulsion was obtained having an average particle size of 132 nm, and showing no gel particles.

### Example 3

Primers were made using the binders of examples 1 and 2. A mixture was prepared from 88 g of fully desalinated water, 22 g of a commercial dispersing agent (®Additol VXW 6208, Cytec Surface Specialties Austria GmbH) and 3 g of a commercial defoamer (®Surfynol SE-F, E. I. DuPont de Nemours), complemented with 6 g of a thixotropy agent (®Luwothix HT, Lehmann & Voss) and 3 g of an acrylate thickener (®Acrysol RM 8/12 WA, Rohm & Haas), in which mixture the following pigments were dispersed: 62 g of an iron oxide pigment (®Bayferrox, Bayer AG), 106 g of a modified zinc phosphate (®Heucophos ZPO, Heubach), 55 g of a kaolin (®ASP 600, Engelhardt) and 55 g of a talc (®Talkurn AT1, Norwegian Talc).

The resulting slurry was divided in two equal parts which were each mixed with 240 g each of the aqueous binder solutions of examples 1 and 2, and 1.5 g of a siccative based on cobalt octoate as a 3 % strength aqueous solution and further 58.5 g of water. The resulting aqueous primer compositions P1 and P2 had an efflux time of approximately thirty seconds, as measured in a 4 mm cup according to DIN-EN-ISO 2431.

### Comparative Examples (primers P3 and P4)

For comparison purposes, a primer P3 based on a aqueous emulsion of an oxydatively drying epoxy resin ester (®Duroxyn VEF 4380, Surface Specialties Austria GmbH) and a conventional solvent borne primer 4 P4 based on a rosin modified medium oil alkyd (®Vialkyd AM 404, Surface Specialties Austria GmbH) have been included in the tests. Formulations are summarised in the following table 1.

**Table 1: Compositions of Primers**

| Constituents | Manufacturer | Role | Primer 2 (according to the Invention) | Primer 3 (Epoxy Resin Ester) | Primer 4 (Conventional Alkyd Resin Primer) |
|---|---|---|---|---|---|
| | | Binder | of Example 1 480 g | ®Duroxyn VEF 4380 583 g | ®Vialkyd AM 404 350 g |
| Water | | Diluent | 88 g | | |
| AMP 90 | Angus | Neutralisation Agent | | 2 g | |
| ®Additol VXW 6208 | Surface Specialties Austria GmbH | Dispersing Agent | 22 g | 6 g | 10 g |
| ®Surfinol SE-F | E. I. DuPont de Nemours | Defoamer | 3 g | 3 g | |
| ®Bayferrox 140 | Bayer AG | Iron Oxide Pigment | 62 g | 88 g | 99 g |
| ®Heucopohos ZPO | Heubach | Zinc Phosphate | 106 g | 100 g | 101g |
| ®ASP 600 | Engelhardt | Kaolin | 55 g | 60 g | 60 g |
| ®Talcum AT1 | Norwegian Talc | Talc | 55 g | 60g g | 60 g |
| ®Luwothix HT | Lehmann & Voss | Antisettling Agent | 6 g | 6 g | 10 g |
| ®Acrysol RM 8/12 WA | Rohm & Haas | Thickener | 3 g | 10 g | |
| ®Additol XL 280 | Surface Specialties Austria Gmbl-I | Antisettling Agent | | | 19 g |
| Co-Octoat 3 % strength aqueous solution | | Siccative | 3 g | 6 g | |
| Water | | Diluent | 117g | 76 g | |
| Xylene | | Diluent | | | 278 g |
| Paint | | | 1000 g | 1000 g | 1000 g |

### Example 4

The primers listed in table 1 were applied by spraying onto commercial untreated iron sheets in a dry film thickness of approximately 30 µm (efflux time measured with a 4 mm cup according to DIN EN ISO 2431: approximately 30 s). After drying for ten days at room temperature, a corrosion test according to DIN 50021 was made. The results obtained are summarised in table 2.

A further comparison was included to show the improvement brought about by the chain extension step according to the present invention in comparison to the non-chain extended products of EP-B 1 233 034 B1.

**Table 2: Results of the Corrosion Test**

| Measured after Exposure for | Primer 2 | Primer 3 (Comparison) | Primer 4 (Comparison) | Primer according to EP 1 233 034 B1 |
|---|---|---|---|---|
| 72 h | + | + | + | + |
| 144 h | + | 0 | + | + |
| 240 h | + | - | + | + |
| 400 h | + | - | - | + |
| 480 h | + | - | - | - |

According to the standard, the following ratings were applied:
"very good" : +; "sufficient" : 0; and "not sufficient" : -.

Compared to aqueous primers according to the state of the art, based on oxydatively drying epoxy resin esters, and to conventional solvent borne primers based on alkyd resins, a dramatically improved corrosion protection could be obtained.

### Example 5

Primers 1 and 2 were applied by spraying onto commercial untreated steel sheets in a dry film thickness of approximately 30 µm (efflux time measured with a 4 mm cup according to DIN EN ISO 2431: approximately 30 s). After drying for ten days at room temperature, the coated sheets were further coated with a polyester basecoat coating composition. After drying of this second coating layer, an interlayer adhesion test was made, where primers 3 and 4 as well as the primer according to EP 1 233 034 B1 were used for comparison purposes.

In a reverse impact test (steel ball hitting the uncoated side of the steel sheets), the elevated portion of the steel sheet (coated side) was inspected visually. While ablation of the basecoat layer from the primer layer was observed in the comparative examples, those sheets with primer layers of primers 1 and 2 showed no separation of the coating layers in the cupped regions opposite to the impact zone.

As has been shown, the primer compositions comprising the chain extended adducts of the present invention are improved over the state of the art both in corrosion protection, and interlayer adhesion.

## Claims

1. A chain-extended fatty acid modified hydroxy functional epoxy amine adduct **ABC** which contains urethane groups and comprises moieties derived from epoxy resins **A,** fatty acids **B** and amines **C,** which adduct is chain extended by addition of polyfunctional isocyanates **D** to the adducts **ABC.**

2. The epoxy amine adduct **ACBD** of claim 1 wherein the epoxy resins **A** have two or more epoxide groups per molecule, and a specific amount of substance of epoxide groups of from 0.4 mol/kg to 7 mol/kg.

3. The epoxy amine adduct **ACBD** of claim 1 wherein the fatty acids **B** have at least one olefinic double bond and from 6 to 30 carbon atoms.

4. The epoxy amine adduct **ACBD** of claim 1 wherein the amines **C** are aliphatic linear, branched or cyclic amines having at least one primary or secondary amino group.

5. The epoxy amine adduct **ACBD** of claim 1 wherein the isocyanates **D** have at least two isocyanate groups per molecule and are of aliphatic or aromatic character.

6. A process to produce the epoxy amine adduct **ACBD** of claim 1 wherein the adduct **ABC** is made by either first reacting the epoxy resins **A** with the amines **C** to form an epoxy amine adduct **AC** which is then reacted with fatty acids **B** to form the adduct **ABC,** or by first reacting the epoxy resins **A** with the with fatty acids **B** to form the adduct **AB** which is then reacted with the amines **C** to form the adduct **ABC,** which is then converted to the aqueous phase, and reacted with a polyfunctional isocyanate **D,** wherein the isocyanate **D** has at least two isocyanate groups per molecule and is an aliphatic linear, branched or cyclic isocyanate **D'.**

7. A process to produce the epoxy amine adduct **ACBD** of claim 1 wherein the adduct **ABC** is made by either first reacting the epoxy resins **A** with the amines **C** to form an epoxy amine adduct **AC** which is then reacted with fatty acids **B** to form the adduct **ABC,** or by first reacting the epoxy resins **A** with the with fatty acids **B** to form the adduct **AB** which is then reacted with the amines **C** to form the adduct **ABC,** at least 10 % of the hydroxyl groups of the adduct **ABC** being consumed by subsequent reaction with a polyfunctional isocyanate **D** having at least two isocyanate groups per molecule, which isocyanate **D** is selected from the group consisting of aromatic isocyanates **D"** and aliphatic linear, branched or cyclic isocyanates **D' ,** the reaction product **ABCD** being then converted to the aqueous phase.

8. The process of claim 7 wherein at least 10 % of the hydroxyl groups remaining in the adduct **ABCD** are reacted with a polyfunctional isocyanate **D,** wherein the isocyanate **D** has at least two isocyanate groups per molecule and is an aliphatic linear, branched or cyclic isocyanate **D'.**

9. A method of use of the epoxy amine adduct **ABCD** of claim 1 comprising providing an aqueous dispersion of the said adduct **ABCD**, and mixing the said aqueous dispersion with a nonblocked isocyanate to form a two-pack coating composition.

10. A method of use of the epoxy amine adduct **ABCD** of claim 1 comprising providing an aqueous dispersion of the said adduct **ABCD**, and mixing the said aqueous dispersion with a curing agent selected from the group consisting of blocked isocyanates and aminoplast resin curing agents to form a one-pack stoving coating composition.

11. A method of use of the epoxy amine adduct **ABCD** of claim 1 comprising providing an aqueous dispersion of the said adduct **ABCD**, and admixing to the said aqueous dispersion at least one siccative selected from the group consisting of metal salts of organic acids, which metals are selected from the group consisting of cobalt, manganese, lead, calcium, cerium, zinc, and zirconium, to form an air-drying coating composition.
